# EUROPÄISCHE PATENTANMELDUNG

(11) **EP 3 527 846 A1**
(43) Veröffentlichungstag der Anmeldung: **21.08.2019**
(21) Anmeldenummer: 18000165.3
(22) Anmeldetag: 19.02.2018
(51) Int. Cl.: F16H 1/30

(54) **MOTOR-GETRIEBEANORDNUNG**

(71) Anmelder: IMS Gear SE & Co. KGaA, 78166 Donaueschingen (DE)
(72) Erfinder: Albert, Simon, 79848 Bonndorf im Schwarzwald (DE); Kieninger, Matthias, 78050 Villingen-Schwenningen (DE)
(74) Vertreter: Westphal, Mussgnug & Partner Patentanwälte mbB

(57) **Zusammenfassung**

Die vorliegende Erfindung betrifft eine Motor-Getriebeanordnung (10) für eine Verstelleinrichtung (74) zum Verstellen zweier zueinander verstellbarer Bauteile, umfassend ein Planetengetriebe (12) mit zumindest einem Planetenträger (16), zumindest einem Planetenrad (18), das drehbar im Planetenträger (16) gelagert ist und eine Planetenradverzahnung (20) aufweist, und einem Hohlrad (22) mit einer Innenverzahnung (24), welche mit der Planetenradverzahnung (20) in Eingriff steht, und einen Elektromotor (14) mit einer um eine Motorwellenachse (A_{MW}) drehbaren Motorwelle (15), die mit dem Planetengetriebe (12) zusammenwirkt, und einem Gehäuse (34), welches mit einem ersten Gehäusedeckel (36) verschlossen ist, der zum Planetengetriebe (12) hinzeigt, wobei die Motorwelle (15) mittels eines ersten Lagerungsabschnitts (40) im ersten Gehäusedeckel (36) und mittels eines zweiten Lagerungsabschnitts (42) im Gehäuse (34) gelagert ist. Weiterhin betrifft die Erfindung eine Verstelleinrichtung (74) als solche mit einer derartigen Motor-Getriebeanordnung (10). Darüber hinaus betrifft die Erfindung einen Elektromotor (14) insbesondere zur Verwendung in dieser Motor-Getriebeanordnung (10). Zudem betrifft die Erfindung die Verwendung dieser Motor-Getriebeanordnung (10) für eine Verstelleinrichtung in Fahrzeugen (72) zum Verstellen zweier zueinander verstellbarer Fahrzeugteile.

## Beschreibung

Die vorliegende Erfindung betrifft eine Motor-Getriebeanordnung für eine Verstelleinrichtung zum Verstellen zweier zueinander verstellbarer Bauteile. Weiterhin betrifft die Erfindung eine Verstelleinrichtung als solche mit einer derartigen Motor-Getriebeanordnung. Darüber hinaus betrifft die Erfindung einen Elektromotor insbesondere zur Verwendung in dieser Motor-Getriebeanordnung. Zudem betrifft die Erfindung die Verwendung dieser Motor-Getriebeanordnung für eine Verstelleinrichtung in Fahrzeugen zum Verstellen zweier zueinander verstellbarer Fahrzeugteile.

Verstelleinrichtungen in Fahrzeugen weisen in zunehmendem Maße Hilfsantriebe auf, mit denen zwei zueinander verstellbare Fahrzeugteile relativ zueinander bewegt werden können, ohne dass die Fahrzeuginsassen selbst manuell das hierzu notwendige Drehmoment aufbringen müssen. Ein Beispiel für derartige Hilfsantriebe sind elektromechanische Aktuatoranordnungen, die unter anderem zum Betätigen von Parkbremsen von Fahrzeugen eingesetzt werden. Andere Hilfsantriebe werden beispielsweise für Sitzlängsverstellungen, Heckklappenverstellungen, Fensterheber und Schiebedachverstellungen eingesetzt.

Ein anderer Anwendungsbereich sind beispielsweise Antriebe für Fenster und Rollläden von Gebäuden, die im Zuge der zunehmenden Digitalisierung von Gebäuden, welche mit dem Begriff "Smart Home" bezeichnet wird, eine immer wichtigere Rolle spielen.

Bei Hilfsantrieben werden nahezu ausnahmslos Elektromotoren als Antriebsquelle eingesetzt. Die typischerweise verwendeten Elektromotoren drehen häufig mit einer vergleichsweise hohen Drehzahl, so dass hohe Untersetzungen erforderlich sind, um die Fahrzeugteile mit der gewünschten, vergleichsweise langsamen Bewegung relativ zueinander verstellen zu können. Zudem sind die vom Elektromotor abgegebenen Drehmomente häufig nicht ausreichend, um die Fahrzeugteile bewegen zu können, so dass auch aus diesem Grund Untersetzungen notwendig sind.

In Fahrzeugen ist der zur Verfügung stehende Raum knapp bemessen, so dass der Elektromotor und das zur Über- oder Untersetzung verwendete Getriebe zu einer Motor-Getriebeanordnung zusammengefasst werden. Aus dem Stand der Technik bekannte Motor-Getriebeanordnungen sind beispielsweise in der EP 2 860 336 A2 oder der EP 2 860 338 A2 offenbart, die sich in der Praxis auch bewährt haben. Allerdings benötigen diese Motor-Getriebeanordnungen vergleichsweise viel axialen Bauraum und weisen eine relativ hohe Anzahl von Einzelteilen auf.

Aufgabe einer Ausführungsform der vorliegenden Erfindung ist es, eine Motor-Getriebeanordnung anzugeben, welche im Vergleich zu bekannten Motor-Getriebeanordnungen einen kürzeren axialen Bauraum benötigt und eine verminderte Anzahl von Einzelteilen aufweist. Des Weiteren liegt einer Ausbildung der vorliegenden Erfindung die Aufgabe zugrunde, einen Elektromotor zu schaffen, mit welchem ein verkürzter axialer Bauraum in einer Motor-Getriebeanordnung realisierbar ist. Zudem liegt einer Umsetzung der Erfindung die Aufgabe zugrunde, eine Verstelleinrichtung zum Verstellen zweier zueinander verstellbarer Bauteile anzugeben, die mit einer Motor-Getriebeanordnung mit reduziertem axialem Bauraum betreibbar ist.

Diese Aufgabe wird mit den in den Ansprüchen 1, 16 und 19 angegebenen Merkmalen gelöst. Vorteilhafte Ausführungsformen sind Gegenstand der Unteransprüche.

Eine Ausführungsform der Erfindung betrifft eine Motor-Getriebeanordnung für eine Verstelleinrichtung zum Verstellen zweier zueinander verstellbarer Bauteile, umfassend ein Planetengetriebe mit zumindest einem Planetenträger, zumindest einem Planetenrad, das drehbar im Planetenträger gelagert ist und eine Planetenradverzahnung aufweist, und einem Hohlrad mit einer Innenverzahnung, welche mit der Planetenradverzahnung in Eingriff steht, und einen Elektromotor mit einer um eine Motorwellenachse drehbaren Motorwelle, die mit dem Planetengetriebe zusammenwirkt, und einem Gehäuse, welches mit einem ersten Gehäusedeckel verschlossen ist, der zum Planetengetriebe hinzeigt, wobei die Motorwelle mittels eines ersten Lagerungsabschnitts im ersten Gehäusedeckel und mittels eines zweiten Lagerungsabschnitts im Gehäuse gelagert ist.

Das Gehäuse des Elektromotors muss in jedem Fall geschlossen werden, um Beschädigungen der Elektronik und/oder der Spulen und Bürsten des Elektromotors durch äußere Einflüsse wie Staub und Feuchtigkeit zu verhindern. Vorschlagsgemäß wird das Gehäuse des Elektromotors mit dem ersten Gehäusedeckel verschlossen, der nicht nur eine schützende Wirkung auf die Bestandteile des Elektromotors hat, sondern auch zur Lagerung der Motorwelle auf der zum Planetengetriebe hinzeigenden Seite verwendet wird. Aufgrund der Integration des ersten Gehäusedeckels in die Lagerung der Motorwelle kann die Anzahl der Bauteile gering gehalten werden. Insbesondere werden keine Adapter oder ähnliche Bauteile benötigt, um die Lagerung der Motorwelle unterbringen zu können. Damit einhergehend ergibt sich die Möglichkeit, eine geringe axiale Baulänge der Motor-Getriebeanordnung zu realisieren. Vorschlagsgemäß verschmelzen der Elektromotor und das Planetengetriebe zu einer Baueinheit. Der Elektromotor wird erst dann funktionsfähig, wenn der erste Gehäusedeckel mit dem Gehäuse des Elektromotors verbunden wird. Das Planetengetriebe wird auch erst dann vollständig funktionsfähig, wenn der erste Gehäusedeckel am Gehäuse des Elektromotors befestigt wird. Der erste Gehäusedeckel nimmt somit eine zentrale Stellung ein.

Nach Maßgabe einer weiteren Ausführungsform umfasst das Gehäuse des Elektromotors einen zweiten Gehäusedeckel, mit dem das Gehäuse verschlossen ist, und die Motorwelle mittels des zweiten Lagerungsabschnitts im zweiten Gehäusedeckel gelagert ist. Das eigentliche Gehäuse des Elektromotors kann im Wesentlichen rohrförmig und damit sehr einfach ausgebildet sein. Das Gehäuse ist im Ausgangszustand an beiden Enden offen, so dass je nach Fertigungsablauf der Zugang zum Innern des Gehäuses zumindest von einer Seite möglich ist, sofern dies erforderlich sein sollte. Die Fertigung wird hierdurch flexibel gehalten.

In einer weitergebildeten Ausführungsform kann der erste Lagerungsabschnitt oder der zweite Lagerungsabschnitt ein Wälzlager zum radialen und axialen Lagern der Motorwelle umfassen. Hierzu können beispielsweise Kugellager eingesetzt werden, welche kostengünstig verfügbar sind und sowohl eine axiale als auch eine radiale Lagerung bereitstellen. Die Verwendung von Lagerungsscheiben, wie sie bei Gleitlagern erforderlich ist, kann entfallen, so dass die Anzahl der Bauteile reduziert werden kann.

In einer fortentwickelten Ausführungsform ist der erste Gehäusedeckel um das Wälzlager gespritzt. In dieser Ausführungsform ist die Position des Wälzlagers axial festgelegt, ohne dass eine Distanzscheibe oder ähnliches benötigt wird. Die Anzahl der Bauteile wird reduziert. Zudem entfällt der Einbau des Wälzlagers in den ersten Gehäusedeckel. Nach Entnahme aus dem Spritzgusswerkzeug ist das Wälzlager bereits fertig im ersten Gehäusedeckel angeordnet.

Bei einer weitergebildeten Ausführungsform kann das Hohlrad drehfest mit dem ersten Gehäusedeckel verbunden sein. In dieser Ausführungsform weist die Motor-Getriebeanordnung außen keine drehbaren Teile auf, da das Innenschraubrad den sich drehenden Planetenträger umschließt, wodurch sich die Sicherheit im Betrieb der Motor-Getriebeanordnung erhöhen lässt.

Bei einer weiteren Ausführungsform kann die Motorwelle eine direkt auf der Motorwelle angeordnete Motorwellenverzahnung aufweisen, die mit der Planetenradverzahnung in Eingriff steht. Dadurch, dass die Motorwellenverzahnung direkt auf der Motorwelle angeordnet ist, bildet die Motorwelle selbst das Ritzel oder das Sonnenrad, ohne dass ein zusätzliches Bauteil notwendig ist. Folglich wird die Montage der Motor-Getriebeanordnung dahingehend erleichtert, als dass kein Ritzel oder Sonnenrad vorgehalten und montiert werden muss. Unterbrechungen der Montage durch fehlende oder fehlerhafte Sonnenräder oder Ritzel können vermieden werden. Zudem werden Fehler, die bei der Befestigung des Sonnenrads oder des Ritzels auf der Motorwelle entstehen, abgewendet.

Eine weitergebildete Ausführungsform zeichnet sich dadurch aus, dass die Motorwellenverzahnung einen äußeren Verzahnungsdurchmesser und die Motorwelle zumindest in einem sich der Motorwellenverzahnung anschließenden ersten Wellenabschnitt einen ersten Motorwellendurchmesser aufweist, wobei der Verzahnungsdurchmesser kleiner oder gleich dem ersten Motorwellendurchmesser ist. Hierdurch wird die Montage flexibler, da die Motorwellenverzahnung kein Hindernis bei der Montage darstellt. Insbesondere kann die Lagerungsscheibe von beiden Enden auf die Motorwelle aufgeschoben werden. Selbiges gilt auch für die Gleitlager. Zudem lassen sich die Über- oder Untersetzungsverhältnisse des Planetengetriebes mit abnehmendem Verzahnungsdurchmesser erhöhen.

Nach Maßgabe einer weiteren Ausführungsform weist die Motorwelle einen zweiten Wellenabschnitt mit einem zweiten Wellendurchmesser auf, der kleiner ist als der erste Wellendurchmesser. Es bietet sich dabei an, die Motorwellenverzahnung auf dem ersten Wellenabschnitt und den zweiten Wellenabschnitt so anzuordnen, dass sich der zweite Wellenabschnitt zumindest zum größten Teil innerhalb des Elektromotors befindet. Insbesondere das für die Spulen des Elektromotors benötigte Vo-lumen wächst stark mit dem Wellendurchmesser im Elektromotor an. Je kleiner der Wellendurchmesser der Motorwelle im Elektromotor ist, desto kleiner kann auch der Durchmesser oder die radiale Erstreckung des Elektromotors gewählt werden, so dass die Motor-Getriebeanordnung kompakt ausgeführt werden kann.

Eine weitere Ausführungsform zeichnet sich dadurch aus, dass das Wälzlager im ersten Wellenabschnitt angeordnet ist. Die Anordnung des Wälzlagers im ersten Wellenabschnitt, der den größeren ersten Wellendurchmesser aufweist, ermöglicht es, das Wälzlager ausreichend zu dimensionieren, so dass die Ausfallwahrscheinlichkeit im Betrieb der Motor-Getriebeanordnung sehr gering ist.

Eine weitere Ausführungsform ist dadurch gekennzeichnet, dass die Motorwelle ein erstes Motorwellenteil und ein zweites Motorwellenteil aufweist, die drehfest miteinander verbunden sind, wobei der erste Motorwellenteil eine Motorwellenverzahnung aufweist, die mit der Planetenradverzahnung in Eingriff steht. Das zweite Motorwellenteil durchläuft dabei ganz oder zumindest zum größten Teil das Gehäuse des Elektromotors, so dass für den zweiten Motorwellenteil eine herkömmliche Motorwelle verwendet werden kann, die konstruktiv nicht verändert werden muss. Einzig das erste Motorwellenteil muss an die Verzahnungsgeometrie des Planentengetriebes und je nach Anwendungsfall auch an die Lagerung angepasst werden. Das erste Motorwellenteil kann auf das zweite Motorwellenteil aufgeschoben werden. Die Bereitstellungskosten für die vorschlagsgemäße Motor-Getriebeanordnung können hierdurch gering gehalten werden.

In einer weiteren Ausführungsform kann der erste Lagerungsabschnitt auf dem ersten Motorwellenteil angeordnet sein. Auch hierdurch wird axialer Bauraum eingespart, da auf dem zweiten Motorwellenteil kein Platz für den ersten Lagerungsabschnitt vorgehalten werden muss.

Bei einer weiteren Ausführungsform ist der erste Lagerungsabschnitt auf dem zweiten Motorwellenteil angeordnet. Zwar muss in dieser Ausführungsform der Platz für den ersten Lagerungsabschnitt auf dem zweiten Motorwellenteil vorgehalten werden, wodurch die axiale Baulänge um die Breite des ersten Lagerungsabschnitts erhöht wird. Allerdings ergibt sich in dieser Ausführungsform die Möglichkeit für den Motorenhersteller, den Elektromotor mitsamt dem im ersten Gehäusedeckel und je nach Ausführungsform auch im zweiten Gehäusedeckel gelagerten zweiten Motorwellenteil zu fertigen, ohne sich um das erste Motorwellenteil kümmern zu müssen. Das Aufbringen des ersten Motorwellenteils auf den zweiten Motorwellenteil und die Herstellung der Verzahnung des ersten Motorwellenteils mit dem Planetengetriebe kann in dieser Ausführungsform ausschließlich vom Getriebehersteller übernommen werden.

In einer weiteren Ausführungsform ist das Wälzlager im ersten Lagerungsabschnitt angeordnet und es ist eine Distanzhülse zwischen dem Wälzlager und dem Hohlrad vorgesehen. Die Distanzhülse dient zur axialen Lagerung insbesondere des äußeren Rings des Wälzlagers. Die Distanzhülse lässt sich einfach montieren.

Eine weitergebildete Ausführungsform ist dadurch gekennzeichnet, dass das Planetengetriebe als ein Schraubrad-Planetengetriebe ausgebildet ist, wobei das zumindest eine Planetenrad um eine Planetenradachse drehbar im Planetenträger gelagert ist und die Planetenradachse windschief zu einer Planetenträgerachse verläuft. Bei Schraubrad-Planetengetrieben sind die Sonnenradverzahnung, in diesem Fall die Motorwellenverzahnung, als eine Schraubverzahnung einer Schraubrad-Sonne und das Hohlrad als ein Innenschraubrad ausgebildet. Die Planetenradverzahnung ist auf die Schraubverzahnung der Schraubrad-Sonne angepasst. Selbiges gilt für die Innenverzahnung des Innenschraubrads. In dieser Ausführungsform weist das Planetengetriebe eine Ähnlichkeit mit sogenannten Koaxial-Getrieben auf, wie sie in der WO 2015/036328 A1 und der EP 2 166 252 A1 offenbart sind.

Gemäß einer fortentwickelten Ausführungsform sind das Planetengetriebe und insbesondere das Schraubrad-Planetengetriebe einstufig ausgebildet. Insbesondere das Schraubrad-Planetengetriebe einstufig ausgebildet sein. Im Vergleich zu mehrstufigen Planetengetrieben wird die Komplexität des Antriebsstrangs reduziert, wodurch die Fertigung vereinfacht sowie die Ausfallwahrscheinlichkeit und der benötigte Bauraum verringert werden. Insbesondere wird der Bauraum in axialer Richtung gering gehalten, was vor allem bei Heckklappenverstellungen ein wichtiges Merkmal ist. Die erforderlichen Über- oder Untersetzungsverhältnisse insbesondere bei Heckklappenverstellungen lassen sich mit Schraubrad-Planetengetrieben besonders gut bereitstellen.

Nach einer weiteren Ausführungsform sind der erste Gehäusedeckel vollständig und das Hohlrad zumindest teilweise vom Gehäuse umgeben. Das Gehäuse ist üblicherweise rohrförmig ausgestaltet und in dieser Ausführungsform so lang, dass der erste Gehäusedeckel vollständig im Gehäuse angeordnet ist. Auch das Hohlrad ist zumindest teilweise im Gehäuse angeordnet. Der erste Gehäusedeckel kann mit dem Gehäuse verpresst und das Hohlrad mit dem Gehäuse vercrimpt werden. Ein Laserverschweißen ist nicht notwendig. Da in dieser Ausführungsform das Gehäuse das Planetengetriebe zumindest teilweise umgibt, wirkt das Gehäuse als Schalldämmung, so dass die Geräuschentwicklung verringert wird.

Eine Ausgestaltung der Erfindung betrifft die Verwendung einer Motor-Getriebeanordnung nach einem der vorherigen Ausführungsformen für eine Verstelleinrichtung in Fahrzeugen zum Verstellen zweier zueinander verstellbarer Fahrzeugteile.

Die technischen Effekte und Vorteile, die sich mit der vorschlagsgemäßen Verwendung erreichen lassen, entsprechen denjenigen, die für die vorliegende Motor-Getriebeanordnung erörtert worden sind. Zusammenfassend sei darauf hingewiesen, dass sich die Anzahl der Bauteile und die axiale Baulänge der Motor-Getriebeanordnung vorschlagsgemäß reduzieren lassen. Insbesondere in Fahrzeugen ist der verfügbare Bauraum knapp bemessen, so dass die Reduzierung der axialen Baulänge hier besonders vorteilhaft ist. Die Reduzierung der Anzahl der Bauteile verringert die Wahrscheinlichkeit des Ausfalls der Verstelleinrichtung, zudem werden die zur Herstellung der Verstelleinrichtung benötigte Logistik und Lagerhaltung vereinfacht. Des Weiteren wird die Montage aufgrund der geringeren Anzahl von Bauteilen vereinfacht und die Wahrscheinlichkeit von Fehlmontagen reduziert.

Nach einer weiteren Ausgestaltung der Verwendung ist die Verstelleinrichtung als eine Heckklappenverstellung ausgebildet. Die vereinfachte und fehlerreduzierte Montage der Motor-Getriebeanordnung kommt bei Heckklappenverstellungen, auch als Heckklappenantriebe bezeichnet, besonders deutlich zum Tragen.

Eine Ausbildung der Erfindung betrifft einen Elektromotor insbesondere zur Verwendung in einer Motor-Getriebeanordnung nach einer der zuvor diskutierten Ausgestaltungen, wobei der Elektromotor eine um eine Motorwellenachse drehbaren Motorwelle, die mit dem Planetengetriebe zusammenwirkt, und ein Gehäuse aufweist, welches mit einem ersten Gehäusedeckel verschlossen ist, wobei die Motorwelle mittels eines ersten Lagerungsabschnitts im ersten Gehäusedeckel und mittels eines zweiten Lagerungsabschnitts im Gehäuse gelagert ist. In dieser Ausbildung kann der Elektromotor so mit einem Planetengetriebe verbunden werden, so dass die so entstehende Motor-Getriebeanordnung eine geringe axiale Baulänge aufweist.

Eine weitere Ausbildung zeichnet sich dadurch aus, dass das Gehäuse des Elektromotors einen zweiten Gehäusedeckel umfasst, mit dem das Gehäuse verschlossen ist, und die Motorwelle mittels des zweiten Lagerungsabschnitts im zweiten Gehäusedeckel gelagert ist. Das Vorsehen von zwei Gehäusedeckeln ermöglicht es, einerseits das eigentliche Gehäuse rohrförmig und damit besonders einfach auszugestalten und andererseits den Zugang zum Innern des Gehäuses von beiden Enden zu ermöglichen, was die Flexibilität in der Fertigung erhöht.

Eine Umsetzung der Erfindung betrifft eine Verstelleinrichtung zum Verstellen zweier zueinander verstellbarer Bauteile, umfassend zumindest eine Motor-Getriebeanordnung nach einem der zuvor diskutieren Ausführungsformen. Die technischen Effekte und Vorteile, die sich mit der vorschlagsgemäßen Verstelleinrichtung erreichen lassen, entsprechen denjenigen, die für die vorliegende Motor-Getriebeanordnung erörtert worden sind. Zusammenfassend sei darauf hingewiesen, dass sich die Anzahl der Bauteile und die axiale Baulänge der Motor-Getriebeanordnung vorschlagsgemäß reduzieren lassen. Insbesondere in Fahrzeugen ist der verfügbare Bauraum knapp bemessen, so dass die Reduzierung der axialen Baulänge hier besonders vorteilhaft ist. Die Reduzierung der Anzahl der Bauteile verringert die Wahrscheinlichkeit des Ausfalls der Verstelleinrichtung, zudem werden die zur Herstellung der Verstelleinrichtung benötigte Logistik und Lagerhaltung vereinfacht. Des Weiteren wird die Montage aufgrund der geringeren Anzahl von Bauteilen vereinfacht und die Wahrscheinlichkeit von Fehlmontagen reduziert.

Beispielhafte Ausführungsformen der Erfindung werden im Folgenden unter Bezugnahme auf die beigefügten Zeichnungen näher erläutert. Es zeigen
- Figur 1A: eine erste Ausführungsform einer erfindungsgemäßen Motor-Getriebeanordnung anhand einer Schnittdarstellung in einem nicht fertig montierten Zustand,
- Figur 1B: die in Figur 1A gezeigte Motor-Getriebeanordnung anhand einer perspektivischen Darstellung im fertig montierten Zustand,
- Figur 2: eine zweite Ausführungsform einer erfindungsgemäßen Motor-Getriebeanordnung,
- Figur 3: eine dritte Ausführungsform einer erfindungsgemäßen Motor-Getriebeanordnung,
- Figur 4: eine vierte Ausführungsform einer erfindungsgemäßen Motor-Getriebeanordnung, jeweils anhand einer Schnittdarstellung im fertig montierten Zustand, und
- Figur 5: eine prinzipielle Darstellung einer Verstelleinrichtung in einem Fahrzeug.

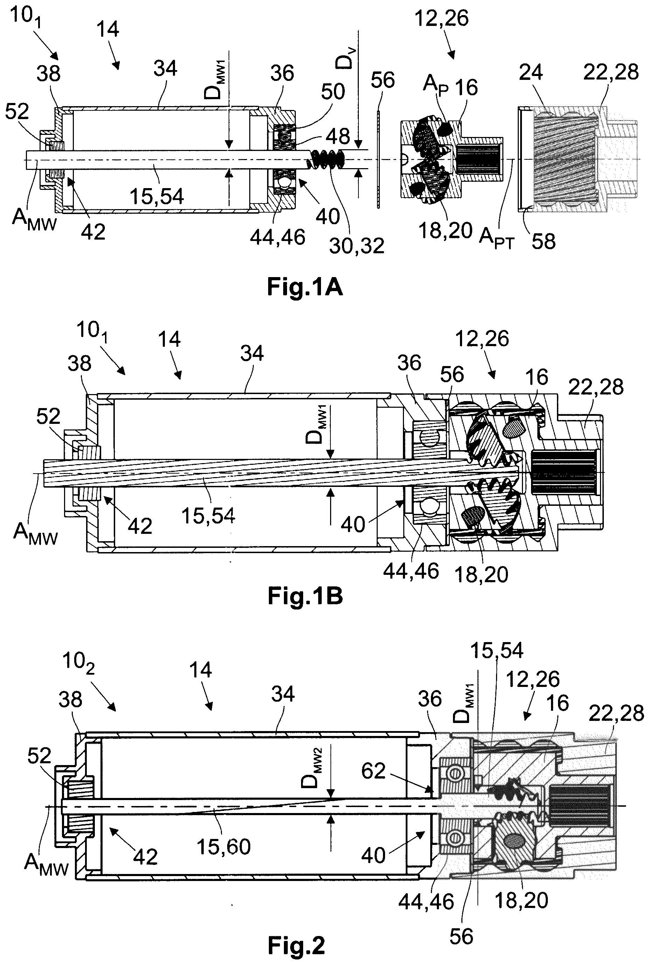

In den Figuren 1A und 1B ist eine erste Ausführungsform einer erfindungsgemäßen Motor-Getriebeanordnung 10₁ einmal in einem nicht fertig montierten Zustand und einmal in einem fertig montierten Zustand gezeigt. Die Motor-Getriebeanordnung 10₁ umfasst ein Planetengetriebe 12 und einen Elektromotor 14. Der Elektromotor 14 ist mit einer Motorwelle 15 ausgestattet, die um eine Motorwellenachse A_{MW} drehbar ist.

Das Planetengetriebe 12 weist einen Planetenträger 16 auf, der eine Planetenträgerachse A_{PT} definiert und auf welchem insgesamt drei Planetenräder 18 um eine Planetenradachse Ap drehbar gelagert sind. Die Planetenräder 18 verfügen über eine Planetenradverzahnung 20. Weiterhin umfasst das Planetengetriebe 12 ein Hohlrad 22 mit einer Innenverzahnung 24, welche mit der Planetenradverzahnung 20 in Eingriff steht.

In der dargestellten Ausführungsform ist das Planetengetriebe 12 als ein Schraubrad-Planetengetriebe 26 ausgebildet. Bei dieser Ausführungsform verlaufen die Planetenradachsen Ap windschief zur Planetenträgerachse A_{PT}. Weiterhin ist hierbei das Hohlrad 22 als ein Innenschraubrad 28 ausgeführt.

Die Motorwelle 15 weist eine direkt auf der Motorwelle 15 angeordnete Motorwellenverzahnung 30 auf, die als eine Schraubverzahnung einer Schraubrad-Sonne 32 ausgebildet ist. Die Motorwellenverzahnung 30 bildet ein Ende der Motorwelle 15. Die Planetenradverzahnung 20 und die Innenverzahnung 24 des Innenschraubrads 28 sind an die Schraubverzahnung der Schraubrad-Sonne 32 angepasst, um einen möglichst optimalen Eingriff innerhalb des Schraubrad-Planetengetriebes 26 bereitzustellen.

Der Elektromotor 14 umfasst ein Gehäuse 34, welches mit einem ersten Gehäusedeckel 36 und einem zweiten Gehäusedeckel 38 verschlossen ist. Im ersten Gehäusedeckel 36 sind ein erster Lagerungsabschnitt 40 und im zweiten Gehäusedeckel 38 ein zweiter Lagerungsabschnitt 42 angeordnet, mit denen die Motorwelle 15 im Gehäuse 34 gelagert ist. In der ersten Ausführungsform ist die Motorwelle 15 im ersten Lagerungsabschnitt 40 mittels eines Wälzlagers 44, in diesem Fall mittels eines Kugellagers 46, sowohl radial als auch axial gelagert. Das Kugellager 46 weist einen auf die Motorwelle 15 aufgepressten Innenring 48 und einen mit dem ersten Gehäusedeckel 36 in Kontakt stehenden Außenring 50 auf. Die Motorwelle 15 ist im zweiten Lagerungsabschnitt 42 mittels eines Gleitlagers 52 gelagert, wozu das Gleitlager 52 auf die Motorwelle 15 aufgepresst ist.

Die Motorwelle 15 weist, einen ersten Wellenabschnitt 54 auf, in welcher die Motorwelle 15 einen ersten Motorwellendurchmesser D_{MW1} aufweist. Die Motorwellenverzahnung 30 weist einen äußeren Verzahnungsdurchmesser Dv auf. Je nach gewählter Verzahnung kann der äußere Verzahnungsdurchmesser Dv der Kopfkreisdurchmesser sein. In der dargestellten ersten Ausführungsform ist der äußere Verzahnungsdurchmesser Dv gleich dem ersten Motorwellendurchmesser D_{MW1}, wobei der äußere Verzahnungsdurchmesser D_{V} auch kleiner als der erste Motorwellendurchmesser D_{MW1} gewählt werden kann. Folglich können das Gleitlager 52 und das Kugellager 46 über die Motorwellenverzahnung 30 geschoben oder die Motorwellenverzahnung 30 durch das Gleitlager 52 und das Kugellager 46 durchgeführt werden.

Zum Verbinden des Planetengetriebes 12 mit dem Elektromotor 14 werden diese so zueinander ausgerichtet, dass die Motorwellenachse A_{MW} und die Planetenträgerachse A_{PT} miteinander fluchten. Anschließend wird die Motorwelle 15 mit der Motorwellenverzahnung 30 in das Planetengetriebe 12 eingebracht, so dass die Motorwellenverzahnung 30 mit der Planetenradverzahnung 20 in Eingriff steht. Das Hohlrad 22 wird drehfest und in axialer Richtung fest mit dem ersten Gehäusedeckel 36 verbunden, beispielsweise durch Laserschweißen. Wie man vor allem aus Figur 1A erkennen kann, weist die Motor-Getriebeanordnung 10₁ eine Distanzscheibe 56 auf, mit dem der Außenring 50 des Kugellagers 46 axial fixiert wird. Das Hohlrad 22 ist mit einem Absatz 58 versehen, an welchem die Distanzscheibe 56 im montierten Zustand anliegt. Mit der Distanzscheibe 56 kann das Getriebespiel begrenzt werden. Erst bei erfolgter Montage des ersten Gehäusedeckels 36 am Gehäuse 34 erhält der Elektromotor 34 seine Funktionsfähigkeit.

In Figur 2 ist eine zweite Ausführungsform der erfindungsgemäßen Motor-Getriebeanordnung 10₂ anhand einer Schnittdarstellung gezeigt. Der grundsätzliche Aufbau der Motor-Getriebeanordnung 10₁ nach der zweiten Ausführungsform gleicht der Motor-Getriebeanordnung 10₁ nach der ersten Ausführungsform, allerdings weist die Motorwelle 15 neben dem ersten Wellenabschnitt 54 auch einen zweiten Wellenabschnitt 60 mit einem zweiten Motorwellendurchmesser D_{MW2} auf. Der zweite Motorwellendurchmesser D_{MW2} ist geringer als der erste Motorwellendurchmesser D_{MW1}, so dass die Motorwelle 15 eine Stufe 62 bildet. Das Kugellager 46 ist im ersten Wellenabschnitt 54 angeordnet, während das Gleitlager 52 im zweiten Wellenabschnitt 60 angeordnet ist. Das zum inneren des Gehäuses 34 hinzeigende Ende des Kugellagers 46 schließt in etwa bündig mit der Stufe 62 ab. Nahezu das gesamte Gehäuse 34 wird vom zweiten Wellenabschnitt 60 durchlaufen.

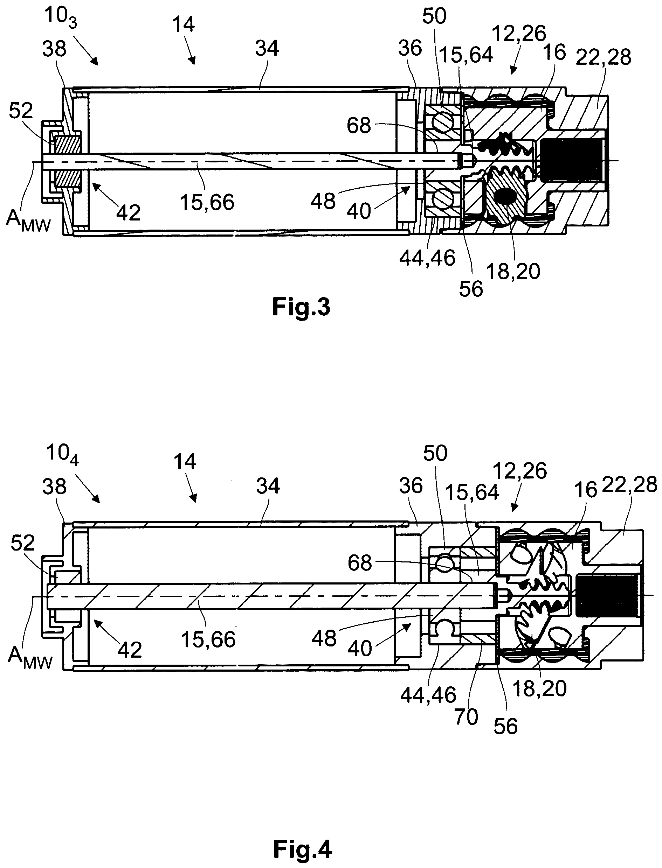

In Figur 3 ist eine dritte Ausführungsform der erfindungsgemäßen Motor-Getriebeanordnung 10₃ anhand einer Schnittdarstellung gezeigt. Die Motorwelle 15 weist ein erstes Motorwellenteil 64 und ein zweites Motorwellenteil 66 auf, die drehfest miteinander verbunden sind. Hierzu bildet das erste Motorwellenteil 64 einen Aufnahmeabschnitt 68, in welchen das zweite Motorwellenteil 66 eingebracht ist. Die Motorwellenverzahnung 30 ist im ersten Motorwellenteil 64 angeordnet. Im Aufnahmeabschnitt 68 weist das erste Motorwellenteil 64 einen größeren Durchmesser auf als dort, wo die Motorwellenverzahnung 30 angeordnet ist. Der Innenring 48 des Kugellagers 46 ist auf das erste Motorwellenteil 64 aufgepresst, so dass der erste Lagerungsabschnitt 40 auf dem ersten Motorwellenteil 64 angeordnet ist. Das zum inneren des Gehäuses 34 hinzeigende Ende des Kugellagers 46 schließt in etwa bündig mit dem ersten Motorwellenteil 64 ab. Nahezu das gesamte Gehäuse 34 wird vom zweiten Motorwellenteil 66 durchlaufen.

In Figur 4 ist eine vierte Ausführungsform der erfindungsgemäßen Motor-Getriebeanordnung 10₄ anhand einer Schnittdarstellung gezeigt, bei welcher die Motorwelle 15 ebenfalls das erste Motorwellenteil 64 und das zweite Motorwellenteil 66 aufweist. In dieser Ausführungsform ist aber der erste Lagerungsabschnitt 40 nicht auf dem ersten Motorwellenteil 64, sondern auf dem zweiten Motorwellenteil 66 angeordnet. Der Innenring 48 des Kugellagers 46 ist auf das zweite Motorwellenteil 66 aufgepresst und liegt am ersten Motorwellenteil 64 an. Zur Überbrückung der Distanz zwischen dem Außenring 50 und der Distanzscheibe 56 dient eine Distanzhülse 70. Im Vergleich zur dritten Ausführungsform der erfindungsgemäßen Motor-Getriebeanordnung 10₃ ist der Durchmesser des zweiten Motorwellenteils 66 beim der vierten Ausführungsform der erfindungsgemäßen Motor-Getriebeanordnung 10₄ größer.

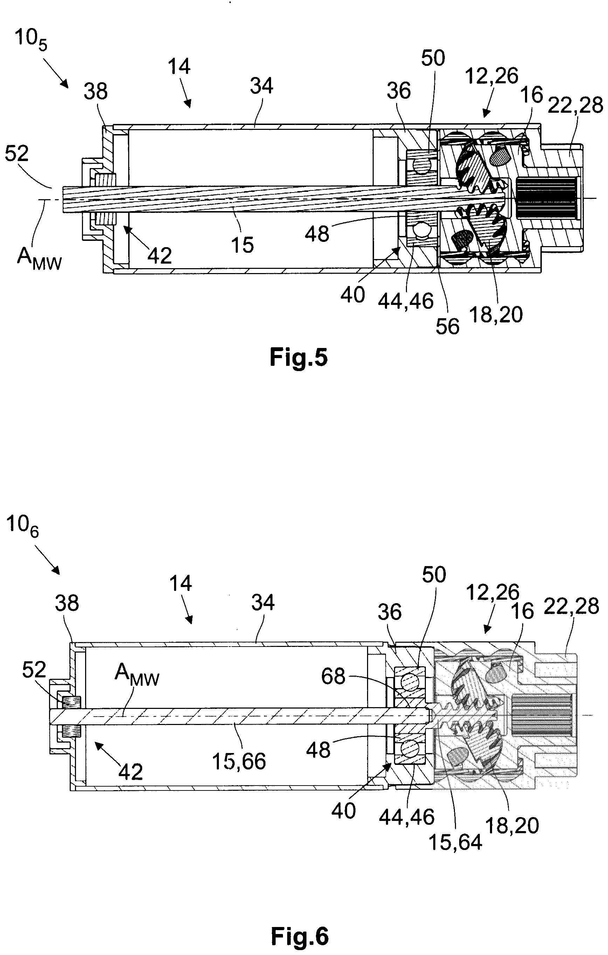

Figur 5 zeigt eine fünfte Ausführungsform der erfindungsgemäßen Motor-Getriebeanordnung 10₅ anhand einer Schnittdarstellung im montierten Zustand. In dieser Ausführungsform ist das Gehäuse 34 in axialer Richtung deutlich länger als in den übrigen Ausführungsformen, so dass der erste Gehäusedeckel 36 vollständig innerhalb des Gehäuses 34 angeordnet werden kann. Darüber hinaus ist auch das Hohlrad 22 teilweise im Gehäuse 34 angeordnet. Der erste Gehäusedeckel 36 kann im Gehäuse 34 verpresst sein. Die Distanzscheibe 56 liegt am Außenring 50 des Kugellagers 46 an. Das Hohlrad 22 wird soweit in das Gehäuse 34 eingebracht, bis das Hohlrad 22 an der Distanzscheibe 56 anliegt. Anschließend können das Hohlrad 22 und das Gehäuse 34 beispielsweise durch Vercrimpen miteinander verbunden werden.

In Figur 6 ist ein sechstes Ausführungsbeispiel der vorschlagsgemäßen Motor-Getriebeanordnung 10₆ dargestellt. Das Wälzlager 44 ist auf dem ersten Motorwellenteil 64 angeordnet. Weiterhin ist der erste Gehäusedeckel 36 um das Wälzlager 44 gespritzt.

Bei sämtlichen Ausführungsformen der Motor-Getriebeanordnung 10 sind die beiden Lagerungsabschnitte 36, 38 im Gehäuse 34 des Elektromotors 14 angeordnet, so dass kein Lager im Planetenträger 16 angeordnet werden muss, was die Montage vereinfacht.

In den Figuren 2 bis 6 ist der äußere Verzahnungsdurchmesser Dv aus Darstellungsgründen nicht eingezeichnet. Die Erläuterungen zum Verzahnungsdurchmesser Dv, welche zu dem ersten Ausführungsbeispiel der Motor-Getriebeanordnung 10₁ erläutert worden sind, gelten gleichermaßen für das zweite bis sechste Ausführungsbeispiel der Motor-Getriebeanordnung 10₂ - 10₆.

Aus den Ausführungsbeispielen 10₁ bis 10₆ ergeben sich weitere Kombinationsmöglichkeiten, die nicht explizit dargestellt worden sind, sich aber ohne weiteres aus den Ausführungsbeispielen ergeben. So kann beispielsweise die in Figur 4 dargestellte Distanzhülse 70 auch dann eingesetzt werden, wenn die Motorwelle 15 einstückig ausgeführt ist. Auch lässt sich das in Figur 5 dargestellte, den ersten Gehäusedeckel 36 ganz und das Hohlrad zumindest teilweise umschließende Gehäuse 34 unabhängig von der Gestaltung der Motorwelle 15 verwendet werden.

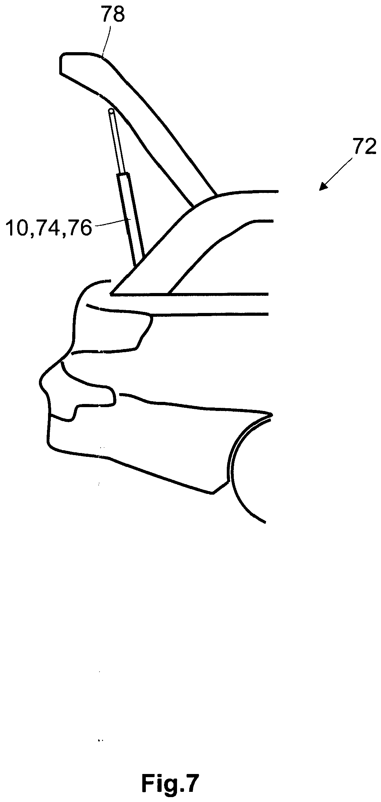

In Figur 7 ist ein Fahrzeug 72 anhand einer prinzipiellen Seitenansicht teilweise gezeigt, welches eine Verstelleinrichtung 74 zum Verstellen zweier zueinander verstellbarer Fahrzeugteile aufweist. In diesem Fall ist die Verstelleinrichtung 74 als eine Heckklappenverstellung 76 ausgeführt, mit welcher eine Heckklappe 78 des Fahrzeugs 72 gegenüber dem übrigen Fahrzeug 72 verstellt und somit geöffnet und geschlossen werden kann.

Die Heckklappenverstellung 76 weist eine Motor-Getriebeanordnung 10 nach einer der zuvor beschriebenen Ausführungsformen auf, die in Figur 5 nicht explizit dargestellt ist.

### Bezugszeichenliste

- 10, 10₁ - 10₆: Motor-Getriebeanordnung
- 12: Planetengetriebe
- 14: Elektromotor
- 15: Motorwelle
- 16: Planetenträger
- 18: Planetenrad
- 20: Planetenradverzahnung
- 22: Hohlrad
- 24: Innenverzahnung
- 26: Schraubrad-Planetengetriebe
- 28: Innenschraubrad
- 30: Motorwellenverzahnung
- 32: Schraubrad-Sonne bzw Schraubverzahnung
- 34: Gehäuse
- 36: erster Gehäusedeckel
- 38: zweiter Gehäusedeckel
- 40: erster Lagerungsabschnitt
- 42: zweiter Lagerungsabschnitt
- 44: Wälzlager
- 46: Kugellager
- 48: Innenring
- 50: Außenring
- 52: Gleitlager
- 54: erster Wellenabschnitt
- 56: Distanzscheibe
- 58: Absatz
- 60: zweiter Wellenabschnitt
- 62: Stufe
- 64: erstes Motorwellenteil
- 66: zweites Motorwellenteil
- 68: Aufnahmeabschnitt
- 70: Distanzhülse
- 72: Fahrzeug
- 74: Verstelleinrichtung
- 76: Heckklappenverstellung
- 78: Heckklappe

- A_{MW}: Achse
- A_{PT}: Planetenträger
- A_{P}: Planetenachse
- D_{MW1}: erster Motorwellendurchmesser
- D_{MW2}: zweiter Motorwellendurchmesser
- D_{V}: äußerer Verzahnungsdurchmesser

## Patentansprüche

1. Motor-Getriebeanordnung für eine Verstelleinrichturig (74) zum Verstellen zweier zueinander verstellbarer Bauteile, umfassend
- ein Planetengetriebe (12) mit
zumindest einem Planetenträger (16),
zumindest einem Planetenrad (18), das drehbar im Planetenträger (16) gelagert ist und eine Planetenradverzahnung (20) aufweist, und
einem Hohlrad (22) mit einer Innenverzahnung (24), welche mit der Planetenradverzahnung (20) in Eingriff steht, und
- einen Elektromotor (14) mit
einer um eine Motorwellenachse (A_{MW}) drehbaren Motorwelle (15), die mit dem Planetengetriebe (12) zusammenwirkt, und
einem Gehäuse (34), welches mit einem ersten Gehäusedeckel (36) verschlossen ist, der zum Planetengetriebe (12) hinzeigt, wobei
- die Motorwelle (15) mittels eines ersten Lagerungsabschnitts (40) im ersten Gehäusedeckel (36) und mittels eines zweiten Lagerungsabschnitts (42) im Gehäuse (34) gelagert ist.

2. Motor-Getriebeanordnung nach Anspruch 1,
**dadurch gekennzeichnet, dass** das Gehäuse (34) des Elektromotors (14) einen zweiten Gehäusedeckel (38) umfasst, mit dem das Gehäuse (34) verschlossen ist, und die Motorwelle (15) mittels des zweiten Lagerungsabschnitts (42) im zweiten Gehäusedeckel (38) gelagert ist.

3. Motor-Getriebeanordnung nach einem der Ansprüche 1 oder 2,
**dadurch gekennzeichnet, dass** der erste Lagerungsabschnitt (40) oder der zweite Lagerungsabschnitt (42) ein Wälzlager (44) zum radialen und axialen Lagern der Motorwelle (15) umfasst.

4. Motor-Getriebeanordnung nach Anspruch 3,
**dadurch gekennzeichnet, dass** der erste Gehäusedeckel (36) um das Wälzlager (44) gespritzt ist.

5. Motor-Getriebeanordnung nach einem der vorherigen Ansprüche,
**dadurch gekennzeichnet, dass** das Hohlrad (22) drehfest mit dem ersten Gehäusedeckel (36) verbunden ist.

6. Motor-Getriebeanordnung nach einem der vorherigen Ansprüche,
**dadurch gekennzeichnet, dass** die Motorwelle (15) eine direkt auf der Motorwelle (15) angeordnete Motorwellenverzahnung (30) aufweist, die mit der Planetenradverzahnung (20) in Eingriff steht.

7. Motor-Getriebeanordnung nach Anspruch 6,
**dadurch gekennzeichnet, dass** die Motorwellenverzahnung (30) einen äußeren Verzahnungsdurchmesser (DV) und die Motorwelle (15) zumindest in einem sich der Motorwellenverzahnung (30) anschließenden ersten Wellenabschnitt (54) einen ersten Motorwellendurchmesser (D_{MW1}) aufweist, wobei der Verzahnungsdurchmesser (Dv) kleiner oder gleich dem ersten Motorwellendurchmesser (D_{MW1}) ist.

8. Motor-Getriebeanordnung nach Anspruch 7,
**dadurch gekennzeichnet, dass** die Motorwelle (15) einen zweiten Wellenabschnitt (60) mit einem zweiten Wellendurchmesser (D_{MW2}) aufweist, der kleiner ist als der erste Wellendurchmesser (D_{MW1}).

9. Motor-Getriebeanordnung nach den Ansprüchen 3 und 8,
**dadurch gekennzeichnet, dass** das Wälzlager (44) im ersten Wellenabschnitt (54) angeordnet ist.

10. Motor-Getriebeanordnung nach einem der Ansprüche 1 bis 5,
**dadurch gekennzeichnet, dass** die Motorwelle (15) ein erstes Motorwellenteil (64) und ein zweites Motorwellenteil (66) aufweist, die drehfest miteinander verbunden sind, wobei der erste Motorwellenteil (64) eine Motorwellenverzahnung (30) aufweist, die mit der Planetenradverzahnung (20) in Eingriff steht.

11. Motor-Getriebeanordnung nach Anspruch 10,
**dadurch gekennzeichnet, dass** der erste Lagerungsabschnitt (40) auf dem ersten Motorwellenteil (64) angeordnet ist.

12. Motor-Getriebeanordnung nach Anspruch 10,
**dadurch gekennzeichnet, dass** der erste Lagerungsabschnitt (40) auf dem zweiten Motorwellenteil (66) angeordnet ist.

13. Motor-Getriebeanordnung nach Anspruch 12,
**dadurch gekennzeichnet, dass** das Wälzlager (44) im ersten Lagerungsabschnitt (40) angeordnet ist und eine Distanzhülse (70) zwischen dem Wälzlager (44) und dem Hohlrad (22) vorgesehen ist.

14. Motor-Getriebeanordnung nach einem der vorherigen Ansprüche,
**dadurch gekennzeichnet, dass** das Planetengetriebe (12) als ein Schraubrad-Planetengetriebe (26) ausgebildet ist, wobei das zumindest eine Planetenrad (18) um eine Planetenradachse (A_{P}) drehbar im Planetenträger (16) gelagert ist und die Planetenradachse (Ap) windschief zu einer Planetenträgerachse (A_{PT}) verläuft.

15. Motor-Getriebeanordnung nach einem der vorherigen Ansprüche,
**dadurch gekennzeichnet, dass** der erste Gehäusedeckel (36) vollständig und das Hohlrad (22) zumindest teilweise vom Gehäuse (34) umgeben sind.

16. Elektromotor insbesondere zur Verwendung in einer Motor-Getriebeanordnung (10) nach einem der Ansprüche 1 bis 16, wobei der Elektromotor eine um eine Motorwellenachse (A_{MW}) drehbaren Motorwelle (15), die mit dem Planetengetriebe zusammenwirkt, und ein Gehäuse (34) aufweist, welches mit einem ersten Gehäusedeckel (36) verschlossen ist, wobei die Motorwelle (15) mittels eines ersten Lagerungsabschnitts (40) im ersten Gehäusedeckel (36) und mittels eines zweiten Lagerungsabschnitts (42) im Gehäuse (34) gelagert ist.

17. Elektromotor nach Anspruch 16,
**dadurch gekennzeichnet, dass** das Gehäuse (34) des Elektromotors (14) einen zweiten Gehäusedeckel (38) umfasst, mit dem das Gehäuse (34) verschlossen ist, und die Motorwelle (15) mittels des zweiten Lagerungsabschnitts (42) im zweiten Gehäusedeckel (38) gelagert ist.

18. Verstelleinrichtung zum Verstellen zweier zueinander verstellbarer Bauteile, umfassend zumindest eine Motor-Getriebeanordnung (10) nach einem der Ansprüche 1 bis 15.

## Geänderte Patentansprüche

### Geänderte Patentansprüche gemäss Regel 137(2) EPÜ.

1. Motor-Getriebeanordnung (10, 10₁, 10₂, 10₃, 10₄, 10₅, 10₆) für eine Verstelleinrichtung (74) zum Verstellen zweier zueinander verstellbarer Bauteile, umfassend
- ein Planetengetriebe (12) mit
zumindest einem Planetenträger (16),
zumindest einem Planetenrad (18), das drehbar im Planetenträger (16) gelagert ist und eine Planetenradverzahnung (20) aufweist, und
einem Hohlrad (22) mit einer Innenverzahnung (24), welche mit der Planetenradverzahnung (20) in Eingriff steht, und
- einen Elektromotor (14) mit
einer um eine Motorwellenachse (A_{MW}) drehbaren Motorwelle (15), die mit dem Planetengetriebe (12) zusammenwirkt, und
einem Gehäuse (34), welches mit einem ersten Gehäusedeckel (36) verschlossen ist, der zum Planetengetriebe (12) hinzeigt, wobei
- die Motorwelle (15) mittels eines ersten Lagerungsabschnitts (40) im ersten Gehäusedeckel (36) und mittels eines zweiten Lagerungsabschnitts (42) im Gehäuse (34) gelagert ist,
**dadurch gekennzeichnet, dass** das Gehäuse (34) des Elektromotors (14) einen zweiten Gehäusedeckel (38) umfasst, mit dem das Gehäuse (34) verschlossen ist, und die Motorwelle (15) mittels des zweiten Lagerungsabschnitts (42) im zweiten Gehäusedeckel (38) gelagert ist.

2. Motor-Getriebeanordnung nach Anspruch 1,
**dadurch gekennzeichnet, dass** der erste Lagerungsabschnitt (40) oder der zweite Lagerungsabschnitt (42) ein Wälzlager (44) zum radialen und axialen Lagern der Motorwelle (15) umfasst.

3. Motor-Getriebeanordnung nach Anspruch 2,
**dadurch gekennzeichnet, dass** der erste Gehäusedeckel (36) um das Wälzlager (44) gespritzt ist.

4. Motor-Getriebeanordnung nach einem der vorherigen Ansprüche,
**dadurch gekennzeichnet, dass** das Hohlrad (22) drehfest mit dem ersten Gehäusedeckel (36) verbunden ist.

5. Motor-Getriebeanordnung nach einem der vorherigen Ansprüche,
**dadurch gekennzeichnet, dass** die Motorwelle (15) eine direkt auf der Motorwelle (15) angeordnete Motorwellenverzahnung (30) aufweist, die mit der Planetenradverzahnung (20) in Eingriff steht.

6. Motor-Getriebeanordnung nach Anspruch 5,
**dadurch gekennzeichnet, dass** die Motorwellenverzahnung (30) einen äußeren Verzahnungsdurchmesser (DV) und die Motorwelle (15) zumindest in einem sich der Motorwellenverzahnung (30) anschließenden ersten Wellenabschnitt (54) einen ersten Motorwellendurchmesser (D_{MW1}) aufweist, wobei der Verzahnungsdurchmesser (D_{V}) kleiner oder gleich dem ersten Motorwellendurchmesser (D_{MW1}) ist.

7. Motor-Getriebeanordnung nach Anspruch 6,
**dadurch gekennzeichnet, dass** die Motorwelle (15) einen zweiten Wellenabschnitt (60) mit einem zweiten Wellendurchmesser (D_{MW2}) aufweist, der kleiner ist als der erste Wellendurchmesser (D_{MW1}).

8. Motor-Getriebeanordnung nach den Ansprüchen 2 und 7,
**dadurch gekennzeichnet, dass** das Wälzlager (44) im ersten Wellenabschnitt (54) angeordnet ist.

9. Motor-Getriebeanordnung nach einem der Ansprüche 1 bis 4,
**dadurch gekennzeichnet, dass** die Motorwelle (15) ein erstes Motorwellenteil (64) und ein zweites Motorwellenteil (66) aufweist, die drehfest miteinander verbunden sind, wobei der erste Motorwellenteil (64) eine Motorwellenverzahnung (30) aufweist, die mit der Planetenradverzahnung (20) in Eingriff steht.

10. Motor-Getriebeanordnung nach Anspruch 9,
**dadurch gekennzeichnet, dass** der erste Lagerungsabschnitt (40) auf dem ersten Motorwellenteil (64) angeordnet ist.

11. Motor-Getriebeanordnung nach Anspruch 9,
**dadurch gekennzeichnet, dass** der erste Lagerungsabschnitt (40) auf dem zweiten Motorwellenteil (66) angeordnet ist.

12. Motor-Getriebeanordnung nach den Ansprüchen 2 und 11,
**dadurch gekennzeichnet, dass** das Wälzlager (44) im ersten Lagerungsabschnitt (40) angeordnet ist und eine Distanzhülse (70) zwischen dem Wälzlager (44) und dem Hohlrad (22) vorgesehen ist.

13. Motor-Getriebeanordnung nach einem der vorherigen Ansprüche,
**dadurch gekennzeichnet, dass** das Planetengetriebe (12) als ein Schraubrad-Planetengetriebe (26) ausgebildet ist, wobei das zumindest eine Planetenrad (18) um eine Planetenradachse (Ap) drehbar im Planetenträger (16) gelagert ist und die Planetenradachse (A_{P}) windschief zu einer Planetenträgerachse (A_{PT}) verläuft.

14. Motor-Getriebeanordnung nach einem der vorherigen Ansprüche,
**dadurch gekennzeichnet, dass** der erste Gehäusedeckel (36) vollständig und das Hohlrad (22) zumindest teilweise vom Gehäuse (34) umgeben sind.

15. Verstelleinrichtung zum Verstellen zweier zueinander verstellbarer Bauteile, umfassend zumindest eine Motor-Getriebeanordnung (10, 10₁, 10₂, 10₃, 10₄, 10₅, 10₆) nach einem der Ansprüche 1 bis 14.
